# EUROPÄISCHE PATENTSCHRIFT

(11) **EP 0 449 765 B1**
(45) Veröffentlichungstag und Bekanntmachung des Hinweises auf die Patenterteilung: **05.01.1994**
(21) Anmeldenummer: 91810107.2
(22) Anmeldetag: 18.02.1991
(51) Int. Cl.: B23B 45/00, F16H 59/04

(54) **Bohrgerät mit Schaltgetriebe**
Drilling machine with gear speed change
Perceuse avec changement de vitesse

(30) Priorität: 29.03.1990 DE 4010037
(43) Veröffentlichungstag der Anmeldung: 02.10.1991
(73) Patentinhaber: HILTI Aktiengesellschaft, 9494 Schaan (LI)
(72) Erfinder: Neumaier, Anton, W-8080 Fürstenfeldbruck (DE)
(74) Vertreter: Wildi, Roland

(56) Entgegenhaltungen:
- DE-A- 3 240 466
- FR-A- 1 073 433
- FR-A- 1 564 253
- US-A- 2 561 930

## Beschreibung

Die Erfindung betrifft ein Bohrgerät mit Schaltgetriebe zum wahlweisen Einstellen unterschiedlicher Drehzahlen, mit einer gegenüber dem Gerätegehäuse in unterschiedliche Betriebsstellungen verdrehbaren, mit Schaltnocken für das Schaltgetriebe versehenen Handhabe und einem Federbügel, dessen Enden in den Betriebsstellungen in Rastöffnungen einrastbar sind.

Aus der DE-OS 32 40 466 ist ein Bohrgerät mit einem drehbaren Schaltknopf zum Einstellen unterschiedlicher Drehzahlen bekannt. Mittels eines am Gerätegehäuse festgespannten, in Rastöffnungen am Drehknopf einrastbaren Federbügels wird der Schaltknopf in der jeweiligen Betriebsstellung gehalten.

Die am Schaltknopf aufzubringende Schaltkraft wird durch die Federkraft bestimmt. Bei der bekannten Anordnung zeigt sich, dass die Federkraft massgeblich von der Art des Festspannens des Federbügels am Gerätegehäuse abhängt. Je nach Art des Festspannens treten demnach unterschiedliche Schaltkräfte auf. Die Ausbildung der Halterung zum Festpannen des Federbügels ist somit hinsichtlich der Beeinflussung der Federkraft problematisch.

Der Erfindung liegt die Aufgabe zugrunde, ein Bohrgerät mit einer im Aufbau einfachen und montagefreundlichen Handhabe zum Einstellen unterschiedlicher Betriebsstellungen zu schaffen, wobei eine von der Halterung des Federbügels unbeeinflusste Schaltkraft der Handhabe gewährleistet ist.

Erfindungsgemäss wird die Aufgabe bei einem Bohrgerät der eingangs genannten Art dadurch gelöst, dass die Rastöffnungen am Mantel eines gehäuseseitigen Bolzens angeordnet sind und der Federbügel gegenüber dem Gerätegehäuse um den Bolzen von der Handhabe verdrehbar ist.

Bei der erfindungsgemässen Lösung erübrigt sich die Anordnung einer dem Festspannen des Federbügels dienenden Halterung. Der gegenüber dem Gerätegehäuse verdrehbare Federbügel wird hinsichtlich seiner Federkräfte durch äussere Einflüsse, wie Montageart, Fertigungsart und dgl., nicht beeinträchtigt, so dass eine von der Halterung des Federbügels unbeeinflusste Schaltkraft erzielt wird.

Die sind Rastöffnungen an einem gehäuseseitigen Bolzen angeordnet. Der Federbügel ist dabei um den Bolzen verdrehbar. Der auf diese Weise als Drehlager für den Federbügel dienende Bolzen kann von dem Federbügel unter Vorspannung teilweise umgriffen sein. Dadurch ist eine einfache Halterung des Federbügels erzielbar.

Eine Zweipunktverrastung des Federbügels auf dem Bolzen ist mit Vorteil erreichbar, indem für die jeweiligen Betriebsstellungen am Bolzen paarweise einander im wesentlichen diametral gegenüberliegende Rastöffnungen für die Enden des Federbügels vorgesehen sind. Die einzelnen Paare der Rastöffnungen sind zueinander entsprechend dem erforderlichen Schaltweg winkelversetzt angeordnet.

Zur Erzielung einer drehschlüssigen Verbindung mit der Handhabe weist der Federbügel zweckmässig mit der Handhabe zusammenwirkende Mitnahmeschultern auf. An den Mitnahmeschultern können hierzu an der Handhabe vorgesehene Mitnahmenocken angreifen. Die Mitnahmeschultern sind beispielsweise durch Wandungsteile von taschenförmigen Ausbuchtungen des Federbügels gebildet, in welche die Mitnahmenocken einragen. So kann Drehbewegung in beiden Drehrichtungen des Federbügels übertragen werden.

Die Erfindung wird nachstehend anhand von Zeichnungen, die ein Ausführungsbeispiel wiedergeben, näher erläutet. Es zeigt:
- Fig. 1: ein Bohrgerät in Ansicht;
- Fig. 2: einen vergrösserten Schnitt durch das Bohrgerät, gemäss Schnittverlauf II - II in Fig. 1;
- Fig. 3: einen Schnitt durch die Darstellung nach Fig. 2, gemäss Schnittverlauf III - III in Fig. 2

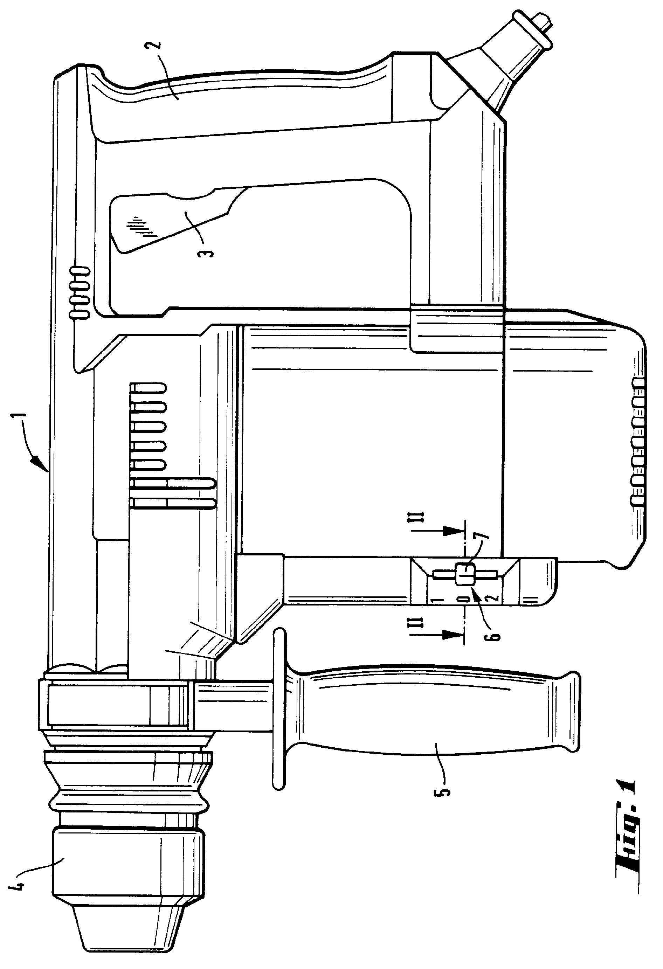

Das in Fig.1 dargestellte Bohrgerät weist im wesentlichen ein Gerätegehäuse 1 mit einem daran befestigten Handgriff 2 auf. Im Handgriff 2 ist ein Schalter 3 für einen im Gerätegehäuse 1 untergebrachten Elektromotor angeordnet. Ferner ist im Gerätegehäuse 1 ein mechanisches Schaltgetriebe vorgesehen, über das einer Werkzeugaufnahme 4 wahlweise unterschiedliche Drehzahlen vermittelt werden können. Am bohrrichtungsseitigen Ende des Gerätegehäuses 1 sitzt angrenzend an die Werkzeugaufnahme 4 ein Seitengriff 5.

Zum Einstellen in unterschiedliche Drehzahlen bewirkende Betriebsstellungen "1", "2" ist eine von aussen betätigbare Handhabe 6 vorgesehen. In der gezeigten Mittelstellung "0" ist die Uebertragung der Drehbewegung an die Werkzeugaufnahme 4 unterbrochen. Die Mittelstellung "0" stellt die Uebergangstellung zwischen den beiden drehzahlbezogenen Betriebsstellungen "1" und "2" dar.

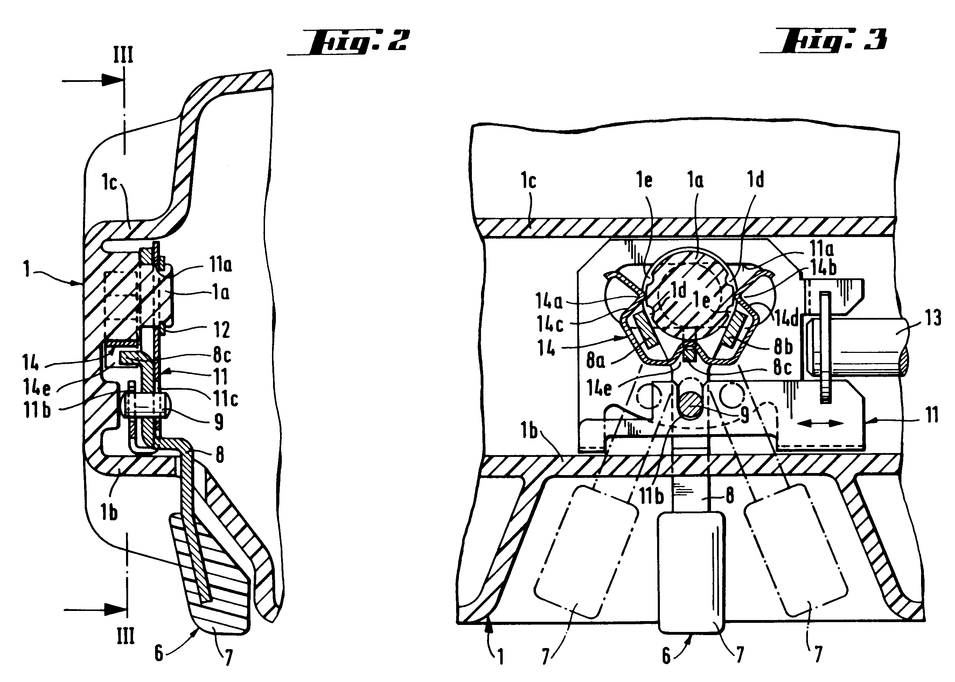

Wie die Fig. 2 und 3 zeigen, besteht die Handhabe 6 aus einem Griffstück 7 und einem mit diesem fest verbundenen Arm 8, der in das Geräteinnere einragt und an einem mit dem Gehäuse 1 einstückig verbundenen Bolzen 1a drehgelagert ist. Ausserhalb des Drehpunktes des Armes 8 weist dieser zwei zueinander symmetrisch angeordnete Mitnahmenocken 8a, 8b auf, welche sich parallel zur Drehachse in Richtung Gehäuseaussenseite erstrecken. Ferner ist am Arm 8 eine Stütznase 8c vorgesehen. In grösserem Radialabstand als die Stütznase 8c ist im Arm 8 ein diesen beidseitig überragender, parallel zur Drehachse sich erstreckender bolzenförmiger Schaltnocken 9 gelagert.

Der Schaltnocken 9 dient dem Verschieben eines Schiebers 11 quer zur Drehachse. Der Schieber 11 ist als Blechbiegeteil geformt und zwischen Seitenwänden 1b, 1c des Gerätegehäuses 1 sowie über den Bolzen 1a, der ein Langloch 11a im Schieber 11 durchgreift, geführt. Mittels eines Sicherungsringes 12 wird der Schieber 11 auf dem Bolzen 1a gehalten. Zum Mitnahmeeingriff des Schaltnockens 9 sind am Schieber 11 zwei Längsausnehmungen 11b, 11c vorgesehen. Die Verschiebebewegung des Schiebers 11 wird auf eine in diesen eingehängte Schaltstange 13 übertragen, welche in an sich bekannter Weise mit dem Schaltgetriebe in Kupplungsverbindung steht.

Die Handhabe 6 ist in den Betriebsstellungen "1" und "2" verrastbar. Hierzu dient ein Federbügel 14, der den Bolzen 1a teilweise umgreift und unter Vorspannung mit den Enden 14a, 14b sich am Mantel des Bolzens 1a abstützt. Am Mantel des Bolzens 1a sind paarweise Rastöffnungen 1d, 1e vorgesehen, in welche in der jeweiligen Betriebsstellung die Enden 14a, 14b zur Verrastung federnd eintauchen. Der Federbügel 14 wird hierzu entsprechend den Betriebstellungen von der Handhabe 6 über die Mitnahmenocken 8a, 8b auf dem Bolzen 1a verdreht, wobei die Mitnahmenocken 8a, 8b an gegenüber der Drehachse im wesentlichen radial abstehenden Mitnahmeschultern 14c bzw. 14d angreifen. Die Stütznase 8c ragt aussenseitig in eine Vertiefung 14e des Federbügels 14 ein und verhindert ein radiales Entweichen des Federbügels 14 vom Bolzen 1a. In Fig. 3 sind die beiden Betriebsstellungen "1" und "2" der Handhabe 6 strichpunktiert angedeutet.

## Patentansprüche

1. Bohrgerät mit Schaltgetriebe zum wahlweisen Einstellen unterschiedlicher Drehzahlen, mit einer gegenüber dem Gerätegehäuse (1) in unterschiedliche Betriebsstellungen verdrehbaren, mit Schaltnocken (9) für das Schaltgetriebe versehenen Handhabe (6) und einem Federbügel (14), dessen Enden (14a, 14b) in den Betriebsstellungen in Rastöffnungen (1d, 1e) einrastbar sind, **dadurch gekennzeichnet**, dass die Rastöffnungen (1d, 1e) am Mantel eines gehäuseseitigen Bolzens (1a) angeordnet sind und der Federbügel (14) gegenüber dem Gerätegehäuse (1) um den Bolzen (1a) von der Handhabe (6) verdrehbar ist.

2. Bohrgerät nach Anspruch 1, dadurch gekennzeichnet, dass für die jeweiligen Betriebsstellungen am Bolzen (1a) paarweise einander im wesentlichen diametral gegenüberliegende Rastöffnungen (1d, 1e) für die Enden (14a, 14b) des Federbügels (14) vorgesehen sind.

3. Bohrgerät nach Anspruch 1 oder 2, dadurch gekennzeichnet, dass der Federbügel (14) zur drehschlüssigen Verbindung mit der Handhabe (6) zusammenwirkende Mitnahmeschultern (14c, 14d) aufweist.

## Claims

1. Geared drilling apparatus for selective setting of different torques, comprising an operating lever (6), which is rotatable into different operating positions relative to the apparatus housing (1) and which has setting cams (9) for the gearing and a spring yoke (14) the ends (14a, 14b) of which are detentable in detent opening (1d, 1e) in the operating positions, **characterised in that** the detent openings (1d, 1e) are arranged on the casing of each casing bolt (1a) and the spring yoke (14) is rotatable relative to the apparatus housing (1) around the pin (1a) by way of the operating lever (6).

2. Drilling apparatus, **characterised in that** for the respective operating positions provision is made on the pin (1a) for pairs of detent openings (1d, 1e) for the ends of the spring yoke (14), which openings are essentially diametrally opposite each other.

3. Drilling apparatus according to claim 1 or 2, **characterised in that** the spring yoke (14) comprises co-acting pickup shoulders (14c, 14d) for the purpose of non-rotational connection to the operating lever (6).

## Revendications

1. Perceuse avec changement de vitesse pour le réglage sélectif de différentes vitesses de rotation, équipée d'une poignée (6) pouvant tourner dans différentes positions de fonctionnement par rapport au boîtier (1) de l'appareil, munie d'une came de contacteur (9) pour le changement de vitesse et d'un étrier de ressort (14), dont les extrémités (14a, 14b) peuvent pénétrer dans des ouvertures d'arrêt (1d, 1e) dans les positions de fonctionnement, caractérisée en ce que les ouvertures d'arrêt (1d, 1e) sont disposées sur la surface latérale d'un tourillon (1a) côté boîtier et l'étrier de ressort (14) peut tourner vis-à-vis du boîtier (1) de l'appareil autour du tourillon (1a) à l'aide de la poignée (6).

2. Perceuse selon la revendication 1, caractérisée en ce que,pour les positions de fonctionnement respectives, sont prévues par paires des ouvertures d'arrêt (1d, 1e) opposées sensiblement diamétralement l'une par rapport à l'autre pour les extrémités (14a, 14b) de l'étrier de ressort (14).

3. Perceuse selon la revendication 1 ou 2, caractérisée en ce que l'étrier de ressort (14) présente, pour la liaison en rotation, des épaulements d'entraînement (14c, 14d) coopérant avec la poignée (6).
